# EUROPÄISCHE PATENTANMELDUNG

(11) **EP 4 201 581 A1**
(43) Veröffentlichungstag der Anmeldung: **28.06.2023**
(21) Anmeldenummer: 21217434.6
(22) Anmeldetag: 23.12.2021
(51) Int. Cl.: B23P 19/04, B25J 9/00, B25J 21/00, B62D 65/06

(54) **ANORDNUNG ZUM APPLIZIEREN EINES DICHTUNGSPROFILS**

(71) Anmelder: AyTec Automation GmbH, 93098 Mintraching (DE)
(72) Erfinder: RUHLAND, Christian, 93161 Sinzing (DE)
(74) Vertreter: Glück Kritzenberger Patentanwälte PartGmbB

(57) **Zusammenfassung**

Die Erfindung betrifft eine Anordnung zum Applizieren eines Dichtungsprofils auf einem Kraftfahrzeugteil (24), welches eine umlaufende Dichtfläche und insbesondere eine über die Dichtfläche hinausstehenden Kante aufweist.

Die Anordnung (10) umfasst eine Applizierstation (12) mit wenigstens einem Applizierroboter (40), der wenigstens einen bewegbaren Roboterarm (28) und einen Applizierkopf (30) zum Applizieren des Dichtungsprofils auf die Dichtfläche des Kraftfahrzeugteils (24) aufweist, als auch eine Haltevorrichtung (16a, 16b) zum Halten des Kraftfahrzeugteils (16) während des Appliziervorgangs. Erfindungsgemäß umfasst die Haltevorrichtung (16a, 16b) wenigstens einen Positionierroboter (16a, 16b), der ausgebildet ist, das Kraftfahrzeugteil (24) während des Applizierens des Dichtungsprofils zu halten.

## Beschreibung

Die vorliegende Erfindung betrifft eine Anordnung mit einer Applizierstation zum Applizieren eines Dichtungsprofils auf eine umlaufende Dichtfläche eines Kraftfahrzeugteils, welches insbesondere eine über die Dichtfläche hinausstehende das Kraftfahrzeugteil umgrenzende Kante aufweist. Derartige Kraftfahrzeugteile sind zum Beispiel Türen, Schiebedächer oder Heckklappen, die jeweils eine von dieser umlaufenden Kante beabstandete umlaufende Dichtfläche aufweisen, mit welcher der Kraftfahrzeuginnenraum gegenüber einem Außenbereich des Kraftfahrzeugs abgedichtet wird. Derartige Kraftfahrzeugteile werden üblicherweise in einer Transporthalterung einer Fördereinrichtung der Anordnung zur Applizierstation transportiert. Die Applizierstation enthält einen Applizierroboter mit wenigstens einem Roboterarm, üblicherweise mit mehreren aneinander angelenkten Armteilen, und mit einem an dem Roboterarm angeordneten Applizierkopf zum Applizieren des Dichtungsprofils auf die Dichtfläche des Kraftfahrzeugteils. Es ist bekannt, das Kraftfahrzeugteil mittels einer Haltevorrichtung während des Applizierens des Dichtungsprofils durch den Applizierroboter zu halten, z.B. durch einen Halterahmen. Der Halterahmen mit einer Vielzahl von Halteklauen zum unbeweglichen Halten des Kraftfahrzeugteils beim Aufbringen des Dichtungsprofils ist jedoch vergleichsweise kompliziert und teuer. Eine derartige Vorrichtung ist beispielsweise aus der DE 10 2018 108 478 A bekannt.

Es ist daher Aufgabe der Erfindung, eine Anordnung der vorstehend genannten Art zu schaffen, bei der das Kraftfahrzeugteil während des Applizierens des Dichtungsprofils mit geringem Aufwand weitgehend unbeweglich gehalten wird, wodurch ein exaktes und reproduzierbares Applizieren des Dichtungsprofils möglich ist. Diese Aufgabe wird gelöst mit einer Anordnung gemäß Anspruch 1 und mit einem Verfahren gemäß Anspruch 13. Vorteilhafte Weiterbildungen der Erfindung sind Gegenstand der zugeordneten abhängigen Ansprüche. Vorteilhafte Ausführungsformen der Erfindung sind ebenfalls in den abhängigen Ansprüchen und in der Beschreibung als auch den Zeichnungen beschrieben.

Erfindungsgemäß hat die Anordnung zum Applizieren eines Dichtungsprofils auf einem Kraftfahrzeugteil eine Applizierstation mit wenigstens einem Applizierroboter, der wenigstens einen bewegbaren Roboterarm und einen Applizierkopf zum Applizieren des Dichtungsprofils auf die Dichtfläche des Kraftfahrzeugteils aufweist, und mit einer Haltevorrichtung zum Halten des Kraftfahrzeugteils während des Appliziervorgangs. Erfindungsgemäß umfasst die Haltevorrichtung wenigstens einen Positionierroboter, der ausgebildet ist, das Kraftfahrzeugteil während des Applizieren des Dichtungsprofils zu halten.

Durch den wenigstens einen - vorzugsweise zwei - Positionierroboter kann das Kraftfahrzeugteil jetzt unkompliziert und sicher derart gehalten werden, dass es sich beim Applizieren des Dichtungsprofils nicht bewegt, was ein exaktes und reproduzierbares Aufbringen des Dichtungsprofils auf die umlaufende Dichtfläche ermöglicht.

Vorzugsweise ist dabei der wenigstens eine Positionierroboter ausgebildet, die Kante des Kraftfahrzeugteils zu greifen, was es ermöglicht, dass die Zugänglichkeit der Dichtfläche für den Applizierroboter nicht beeinträchtigt wird. Zum anderen kann an der Kante das Kraftfahrzeugteil sicher gehalten bzw. stabilisiert werden. Zu dem Zweck hat der Positionierroboter vorzugsweise wenigstens einen Greifer, der in der Lage ist, das Kraftfahrzeugteil, insbesondere dessen Kante zu greifen.

Vorzugsweise hat dieser Greifer wenigstens einen Sensor, insbesondere einen optischen Sensor oder irgendeine andere Art von Näherungssensor, der es ermöglicht, den Greifer exakt an das Kraftfahrzeugteil heranzufahren und dieses zu greifen.

Das Halten des Kraftfahrzeugteils mittels des Greifers erfolgt vorzugsweise durch Formeingriff und/oder Friktionseingriff.

In einer vorteilhaften Weiterbildung der Erfindung hat die Haltevorrichtung zwei Positionierroboter, die ausgebildet sind, während des Appliziervorgangs jeweils eine Kante an einander abgewandten Seiten des Kraftfahrzeugteils zu greifen. Auf diese Weise wird die Kraftfahrzeugtüre zuverlässig sehr starr in ihrer Applizierstellung gehalten. Dies führt zu sehr guten Applikationsergebnissen.

Die Anordnung umfasst vorzugsweise einen Teil einer Fördereinrichtung, die ausgebildet ist, das Kraftfahrzeugteil an der Applizierstation vorbei zu transportieren. Dies ist insbesondere deshalb vorteilhaft, als der wenigstens eine Positionierroboter nur die Positionierungsaufgabe während des Applizieren übernehmen muss und keine Transportaufgabe zur Applizierstation hin und von ihr weg.

Prinzipiell wäre es nun möglich, dass das Kraftfahrzeugteil während des Applizierens durch den wenigstens einen Positionierroboter aus der Fördereinrichtung heraus genommen und in eine Applizierstellung transportiert und dort gehalten und anschließend wieder in die Fördereinrichtung zurück transportiert wird. In einer vorteilhaften Ausführungsform der Erfindung wird indes das Kraftfahrzeugteil in einer Transporthalterung der Fördereinrichtung transportiert und verbleibt während des Applizierens in dieser Transporthalterung der Fördervorrichtung. Dies hat den Vorteil, dass die Positionierroboter überhaupt keine Transportaufgaben übernehmen müssen, da die Applizierstellung des Kraftfahrzeugteils auf dem Förderweg der Fördereinrichtung liegt und dieses in der Transporthalterung verbleibt. Die Positionierroboter übernehmen damit lediglich die Aufgabe der Stabilisierung des Kraftfahrzeugteils in der Transporthalterung während des Applizierens, z.B. durch Greifen von wenigstens zwei Kanten, um somit das Kraftfahrzeugteil weitgehend unbeweglich zu halten.

Dies wiederum erlaubt ein exaktes und reproduzierbares Aufbringen des Dichtungsprofils, welches in der Regel als Gummihohldichtung ausgebildet ist. Zum anderen hält es den Aufwand für die Positionierroboter gering, als diese einfacher ausgebildet werden können, da sie keine Transportfunktionalität benötigen.

Vorzugsweise sind der Applizierroboter und der wenigstens eine Positionierroboter in einem Schutzgehäuse der Applizierstation angeordnet. Dies schützt die Anordnung vor mechanischen und vorzugsweise auch vor elektromagnetischen äußeren Beeinträchtigungen und bietet zudem den geforderten Arbeitsschutz.

Vorzugsweise ist in diesem Falle das Schutzgehäuse zur Fördereinrichtung hin offen, so dass die Zugänglichkeit des Kraftfahrzeugteils für den Applizierroboter und/oder den wenigstens einen Positionierroboter nicht eingeschränkt ist, insbesondere, wenn das Kraftfahrzeugteil beim Applizieren des Dichtungsprofils in der Fördereinrichtung bzw. in der Transporthalterung der Fördereinrichtung verbleibt.

Vorzugsweise ist der wenigstens eine Positionierroboter auf einer Drehbasis angeordnet, so dass er auf einfache Weise die erforderlichen Bewegungen zum Halten bzw. Stabilisieren des Kraftfahrzeugteils und die Bewegungen des Kraftfahrzeugteils relativ zur Fördereinrichtung, wenn notwendig, vornehmen kann.

In diesem Fall weist der wenigstens eine Positionierroboter vorzugsweise wenigstens einen wenigstens zweiteiligen Arm auf, der an der Drehbasis schwenkbar gelagert ist, wobei am freien Ende des Armes ein Greifer mit mehreren Freiheitsgraden beweglich angeordnet ist und die beiden Teile des Armes relativ zueinander schwenkbar sind. Dies ermöglicht mit einem geringen technischen Aufwand eine hohe Beweglichkeit des Greifers zum Ausführen aller erforderlichen Halte- und Transportaufgaben, um das Kraftfahrzeugteil vor dem Applizierroboter zu positionieren und/oder zu halten und/oder zu stabilisieren.

Vorzugsweise weist der wenigstens eine Positionierroboter an einem Ende seines Roboterarms einen Greifer aufweist, der ausgebildet ist, die Kante zu greifen. Auf diese Weise kann er das Kraftfahrzeugteil beim Applizieren des Dichtungsprofils sicher halten und stabilisieren, ohne den Zugang des Applizierroboters zur Dichtfläche zu beeinträchtigen.

Die Erfindung betrifft auch ein Verfahren zum Applizieren eines Dichtungsprofils auf einem Kraftfahrzeugteil, welches eine umlaufende Dichtfläche und vorzugsweise eine über die Dichtfläche hinausstehenden Kante aufweist. Hierbei wird ein Applizierroboter mit wenigstens einem bewegbaren Roboterarm und einem Applizierkopf verwendet, um das Dichtungsprofil beim Entlangfahren des Applizierkopfs auf die Dichtfläche des Kraftfahrzeugteils aufzubringen, wobei das Kraftfahrzeugteil während des Applizierens des Dichtungsprofils von einer Haltevorrichtung gehalten wird. Gemäß der Erfindung wird als Haltevorrichtung während des Applizierens des Dichtungsprofils wenigstens ein Positionierroboter verwendet wird, der das Kraftfahrzeugteil in einer Applizierstellung hält bzw. stabilisiert. Dies ermöglicht mit geringem technischen Aufwand ein exaktes und reproduzierbares Applizieren des Dichtungsprofils auf die Dichtfläche des Kraftfahrzeugteils, da dieses durch den wenigstens einen Positionierroboter, vorzugsweise zwei Positionierroboter in seiner Applizierstellung unbeweglich gehalten wird.

In einer vorteilhaften Weiterbildung der Erfindung greift der Positionierroboter beim Applizieren die Kante des Kraftfahrzeugteils. Er behindert damit nicht den Zugang des Applizierroboters zur Dichtfläche zum Applizieren des Dichtungsprofils.

In einer vorteilhaften Weiterbildung der Erfindung wird das Kraftfahrzeugteil in einer Transporthalterung der Fördereinrichtung transportiert, und das Kraftfahrzeugteil verbleibt während des Applizierens in der Transporthalterung in der Fördereinrichtung. Es wird somit durch den wenigstens einen Positionierroboter, vorzugsweise zwei Positionierroboter, in seiner Applizierstellung lediglich unbeweglich gehalten wird bzw. stabilisiert. Auf diese Weise sind die Positionierroboter nur mit einer Halte- und Stabilisierungsaufgabe betreut und müssen das Kraftfahrzeugteil nicht aus der und in die Fördereinrichtung bewegen. Die Positionierroboter können damit technisch einfacher gestaltet und damit kostengünstiger konzipiert werden.

Vorzugsweise werden zwei Positionierroboter verwendet, um das Kraftfahrzeugteil an zwei einander abgewandten Seiten zu halten. Dies bietet eine sehr gute Stabilisierung des Kraftfahrzeugteils während des Applizierens des Dichtungsprofils, und die Einbringung von Biegekräften in das Kraftfahrzeugteil während des Applizierens durch den Applizierroboter wird minimiert. Das Kraftfahrzeugteil wird somit beim Applizieren weitgehend kräftefrei und unbeweglich gehalten.

Folgende Ausdrücke werden synonym verwendet: Positionierroboter - Stabilisierungsroboter - Halteroboter; stabilisieren - das Kraftfahrzeugteil in der Applizierstellung weitgehend unbeweglich halten; Applizieren - Aufbringen; Transporthalterung - Gehänge; Kraftfahrzeugteil - Kraftfahrzeugtür - Tür; Applizieranordnung - Appliziervorrichtung; drehbare Basis - Drehbasis;

Es ist für den Fachmann offensichtlich, dass die obigen Ausführungsformen der Erfindung, und zwar verfahrenstechnischer als auch vorrichtungstechnischer Art, beliebig miteinander kombiniert werden können.

Die Erfindung wird nachfolgend beispielsweise anhand der schematischen Zeichnung beschrieben. Hierin zeigen:

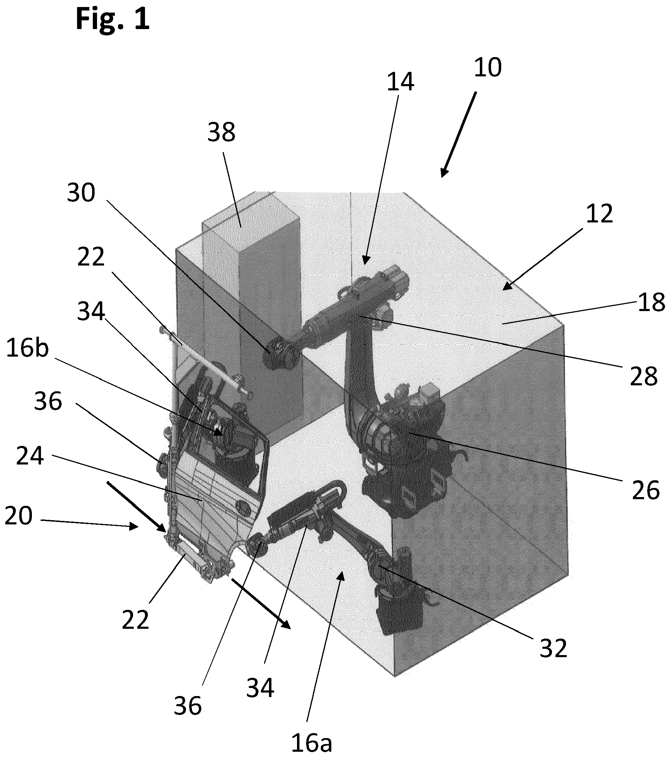

- Fig. 1: eine perspektivische Darstellung einer Anordnung zum Aufbringen eines Dichtungsprofil auf die umlaufende Dichtfläche einer Kraftfahrzeugtür mit einer Applizierstation umfassend einen Applizierroboter und zwei Positionierrobotern zum Stabilisieren der Kraftfahrzeugtür in einer Transporthalterung einer Fördereinrichtung während des Applizierens eines Dichtungsprofils.

Fig. 1 zeigt eine Applizieranordnung 10 zum Applizieren eines Dichtungsprofils auf eine umlaufende Dichtfläche eines Kraftfahrzeugteils 24, in diesem Beispiel einer Kraftfahrzeugtür. Die Applizieranordnung 10 umfasst eine Applizierstation 12 mit einem Applizierroboter 14 und zwei Positionierrobotern 16a, 16b, die in einem Schutzgehäuse 18 angeordnet sind. Das Schutzgehäuse 18 ist in Richtung auf eine Fördereinrichtung 20 offen, welche die Kraftfahrzeugtüren 24 jeweils mittels einer Transporthalterung 22 an der Applizierstation 12 vorbei fördert, wobei die Kraftfahrzeugtür 24 in den Zugriffsbereich des Applizierroboters 14 und der Positionierroboter 16a, 16b gelangt. Die Fördereinrichtung 20 ist hier vereinfacht nur durch Pfeile dargestellt, und ist in ihren variablen Ausführungsarten als solche bekannt. Die Transporthalterung 22, auch Gehänge genannt, hält die Kraftfahrzeugtür 24 sicher während des Transports. Um die Kraftfahrzeugtür 24 während des Applizierens des Dichtungsprofils fest und unbeweglich zu halten, werden die beiden Positionierroboter 16a, 16b verwendet. Prinzipiell könnten die Positionierroboter 16a, 16b die Kraftfahrzeugtür 24 auch aus der Transporthalterung 22 entnehmen oder zusammen mit der Transporthalterung 22 aus der Fördereinrichtung 20 entnehmen, um sie in eine Applizierstellung zu bewegen. Dies würde jedoch erfordern, dass die Positionierroboter 16a, 16b auch zum Tragen der Kraftfahrzeugtür 24 gegebenenfalls sogar zusammen mit der Transporthalterung 24 ausgebildet sein müssten. Dies wird vermieden, wenn die Kraftfahrzeugtür 24 beim Applizieren des Dichtungsprofils durch den Applizierroboter 14 in der Fördereinrichtung 20 als auch in ihrer Transporthalterung 22 verbleiben kann. Die Kraftfahrzeugtür 24 wird somit durch die Positionierroboter 16a, 16b in ihrer Applizierstellung nur stabilisiert, d.h. weitgehend unbeweglich gehalten. Dies ist apparatetechnisch sehr viel einfacher und kostengünstiger zu realisieren, als wenn die Positionierroboter 16a, 16b Transportfunktionalität aufweisen müssten.

Der Applizierroboter 14 hat vorzugsweise eine um eine horizontale Achse schwenkbare Basis 26, an welcher vorzugsweise ein zweiteiliger Arm 28 schwenkbar gehalten ist, dessen beiden Teile relativ zueinander verschwenkbar sind. Am Ende des Arms 28 ist ein multi-beweglicher Applizierkopf 30 angeordnet, der durch entsprechende Ansteuerung des Applizierroboters 14 in der Lage ist, die Dichtungsfläche der Kraftfahrzeugtür 24 entlangzufahren und dabei das Dichtungsprofil auf diese aufzubringen.

Jeder Positionierroboter 16a, 16b enthält wie der Applizierroboter 14 vorzugsweise eine um eine vertikale Achse rotierbare Basis 32, an welcher ein zweiteiliger Arm 34 schwenkbar gelagert ist, an dessen Ende ein Greifer 36 angeordnet ist, der in der Lage ist, die Kraftfahrzeugtür 24 beim Applizieren des Dichtungsprofils zu halten. Vorzugsweise kann der Greifer 36 die Kante der Kraftfahrzeugtür 24 halten, was eine sichere Stabilisierung der Kraftfahrzeugtür 24 beim Applizieren ermöglicht, ohne den Zugriff des Applizierroboters 14 auf die Dichtfläche zu beeinträchtigen.

Die Applizieranordnung 10 hat eine Steuerung 38, welche die Tätigkeit der Fördereinrichtung 20 im Bereich der Applizierstation 12 als auch den Applizierroboter 14 und die beiden Positionierroboter 16a, 16b steuert, um ein exaktes reproduzierbares Applizieren des Dichtungsprofils auf der Kraftfahrzeugtür 24 sicherzustellen. Die Bewegung der Transporthalterung 22 in der Fördereinrichtung 20 wird dabei nach Erreichen ihrer Applizierstellung im Zugriffsbereich des Applizierroboters 14 und der beiden Positionierroboter 16a, 16b gestoppt und nach dem Applizieren wieder in Bewegung gesetzt, um die nächste mit einer Kraftfahrzeugtür 24 bestückte Transporthalterung 22 zu empfangen. Die Transporthalterungen 22 sind in der Fördereinrichtung 20 deshalb vorzugsweise durch die Steuerung 38 individuell bewegbar und stoppbar.

Die Erfindung ist nicht auf die beschriebenen Ausführungsbeispiele beschränkt, sondern kann innerhalb des Schutzbereichs der beiliegenden Ansprüche variiert werden.

### Bezugszeichenliste:

- 10: Applizieranordnung -Appliziervorrichtung
- 12: Applizierstation
- 14: Applizierroboter
- 16a,b: Positionierroboter - Halteroboter
- 18: zur Fördereinrichtung hin offenes Schutzgehäuse der Applizierstation, vorzugsweise elektromagnetisch abgeschirmt
- 20: Fördereinrichtung mit individuell steuerbaren Transporthalterungen
- 22: Transporthalterung der Fördereinrichtung
- 24: Kraftfahrzeugteil - Kraftfahrzeugtür
- 26: drehbare Basis des Applizierroboters
- 28: zweiteiliger Arm des Applizierroboters
- 30: Applizierkopf des Applizierroboters
- 32: drehbare Basis des Positionierroboters
- 34: zweiteiliger Arm des Positionierroboters
- 36: Greifer des Positionierroboters
- 38: Steuerung für die Applizierstation und die Fördereinrichtung im Bereich der Applizierstation

## Patentansprüche

1. Anordnung zum Applizieren eines Dichtungsprofils auf einem Kraftfahrzeugteil (24), welches eine umlaufende Dichtfläche und insbesondere eine über die Dichtfläche hinausstehenden Kante aufweist,
umfassend eine Applizierstation (12) mit wenigstens einem Applizierroboter (40), der wenigstens einen bewegbaren Roboterarm (28) und einen Applizierkopf (30) zum Applizieren des Dichtungsprofils auf die Dichtfläche des Kraftfahrzeugteils (24) aufweist, und mit einer Haltevorrichtung (16a, 16b) zum Halten des Kraftfahrzeugteils (16) während des Appliziervorgangs,
**dadurch gekennzeichnet, dass** die Haltevorrichtung (16a, 16b) wenigstens einen Positionierroboter (16a, 16b) umfasst, der ausgebildet ist, das Kraftfahrzeugteil (24) während des Applizierens des Dichtungsprofils zu halten.

2. Anordnung nach Anspruch 1, **dadurch gekennzeichnet, dass** der wenigstens eine Positionierroboter (16a, 16b) wenigstens einen Greifer (36) zum Greifen des Kraftfahrzeugteils, insbesondere von dessen Kante, aufweist.

3. Anordnung nach Anspruch 2, **dadurch gekennzeichnet, dass** der Greifer mit einem Sensor, z.B. einem optischen Sensor versehen ist.

4. Anordnung nach einem der vorhergehenden Ansprüche,
**dadurch gekennzeichnet, dass** die Haltevorrichtung zwei Positionierroboter (16a, 16b) aufweist, die ausgebildet sind, während des Appliziervorgangs jeweils eine Kante an einander abgewandten Seiten des Kraftfahrzeugteils (24) zu greifen.

5. Anordnung nach einem der vorhergehenden Ansprüche, **dadurch gekennzeichnet, dass** sie wenigstens einen Teil einer Fördereinrichtung (20) umfasst, die ausgebildet ist, das Kraftfahrzeugteil (24) an der Applizierstation (12) vorbei zu transportieren.

6. Anordnung nach Anspruch 5, **dadurch gekennzeichnet, dass** die Fördereinrichtung (20) eine Transporthalterung (22) zum Bewegen des Kraftfahrzeugteils (24) aufweist, wobei die Fördereinrichtung im Zugriffsbereich des Applizierroboters (14) und des Positionierroboters (16a, 16b) angeordnet ist.

7. Anordnung nach Anspruch 6, **dadurch gekennzeichnet, dass** der wenigstens eine Positionierroboter (16a, 16b), ausgebildet ist, das Kraftfahrzeugteil (24) während des Applizierens in seiner Transporthalterung (22) zu halten.

8. Anordnung nach einem der vorhergehenden Ansprüche, **dadurch gekennzeichnet, dass** der Applizierroboter (14) und der wenigstens eine Positionierroboter (16a, 16b) in einem Schutzgehäuse (18) der Applizierstation (12) angeordnet sind.

9. Anordnung nach einem der Ansprüche 5 bis 7 und Anspruch 8, **dadurch gekennzeichnet, dass** das Schutzgehäuse (18) zur Fördereinrichtung (20) hin offen ist.

10. Anordnung nach einem der vorhergehenden Ansprüche, **dadurch gekennzeichnet, dass** der wenigstens eine Positionierroboter (16a, 16b) eine drehbare Basis (32) aufweisen.

11. Anordnung nach Anspruch 10, **dadurch gekennzeichnet, dass** der wenigstens eine Positionierroboter (16a, 16b) einen wenigstens zweiteiligen Arm (34) aufweist, der auf der drehbaren Basis (32) schwenkbar gelagert ist, wobei am freien Ende des Armes (34) ein Greifer (36) mit mehreren Freiheitsgraden beweglich angeordnet ist und die beiden Teile des Armes (34) relativ zueinander schwenkbar sind.

12. Anordnung nach einem der vorhergehenden Ansprüche, **dadurch gekennzeichnet, dass** der wenigstens eine Positionierroboter (16a, 16b) an einem Ende seines Roboterarms einen Greifer aufweist, der ausgebildet ist, die Kante des Kraftfahrzeugteils (24) zu greifen.

13. Verfahren zum Applizieren eines Dichtungsprofils auf einem Kraftfahrzeugteil (24), welches eine umlaufende Dichtfläche und insbesondere eine über die Dichtfläche hinausstehenden Kante aufweist,
wobei ein Applizierroboter (14) mit wenigstens einem bewegbaren Roboterarm (28) und einem Applizierkopf (30) verwendet wird, um das Dichtungsprofil beim Entlangfahren des Applizierkopfs auf die Dichtfläche des Kraftfahrzeugteils (24) aufzubringen, wobei das Kraftfahrzeugteil (24) während des Applizierens des Dichtungsprofils von einer Haltevorrichtung (16a, 16b) gehalten wird,
**dadurch gekennzeichnet, dass** als Haltevorrichtung während des Applizierens des Dichtungsprofils wenigstens ein Positionierroboter (16a, 16b) verwendet wird, der das Kraftfahrzeugteil (24) in einer Applizierstellung hält bzw. stabilisiert.

14. Verfahren nach Anspruch 13, **dadurch gekennzeichnet, dass** der Positionierroboter (16a, 16b) beim Applizieren die Kante des Kraftfahrzeugteils (24) mit einem Greifer (36) greift.

15. Verfahren nach Anspruch 13 oder 14, **dadurch gekennzeichnet, dass** das Kraftfahrzeugteil (24) in einer Transporthalterung (22) der Fördereinrichtung (20) transportiert wird, und dass das Kraftfahrzeugteil (24) während des Applizierens in der Transporthalterung (22) auf der Fördereinrichtung (20) verbleibt und durch den wenigstens einen Positionierroboter (16a, 16b) in seiner Applizierstellung in der Transporthalterung (22) unbeweglich gehalten wird.

16. Verfahren nach einem der Ansprüche 13 bis 15, **dadurch gekennzeichnet, dass** zwei Positionierroboter (16a, 16b) verwendet werden, um das Kraftfahrzeugteil (24) an zwei einander abgewandten Seiten zu halten.
